# EUROPÄISCHE PATENTSCHRIFT

(11) **EP 1 020 094 B1**
(45) Veröffentlichungstag und Bekanntmachung des Hinweises auf die Patenterteilung: **17.12.2003**
(21) Anmeldenummer: 98958183.0
(22) Anmeldetag: 01.10.1998
(51) Int. Cl.: H04Q 7/38

(54) **VERFAHREN ZUR AUTHENTISIERUNG VON TEILNEHMERN EINES DIGITALEN MOBILFUNKNETZES**
METHOD FOR AUTHENTICATING SUBSCRIBERS TO A DIGITAL MOBILE RADIO NETWORK
PROCEDE POUR AUTHENTIFIER LES ABONNES D'UN RESEAU RADIOTELEPHONIQUE MOBILE NUMERIQUE

(30) Priorität: 01.10.1997 DE 19743561
(43) Veröffentlichungstag der Anmeldung: 19.07.2000
(73) Patentinhaber: T-Mobile Deutschland GmbH, 53227 Bonn (DE)
(72) Erfinder: BREMER, Rainer, D-53757 Sankt Augustin (DE)
(74) Vertreter: Riebling, Peter, Dr.-Ing.
(86) Internationale Anmeldenummer: DE9802924
(87) Internationale Veröffentlichungsnummer: WO99018746

(56) Entgegenhaltungen:
- EP-A- 0 714 214
- WO-A-95/21509
- WO-A-97/23107
- DE-A- 19 647 109
- US-A- 5 181 238

## Beschreibung

Die Erfindung betrifft ein Verfahren zur Authentisierung von Teilnehmern eines digitalen Mobilfunknetzes nach dem Oberbegriff des Patentanspruchs 1.

Die Nutzung von in Mobilfunknetzen, insbesondere GSM-Mobilfunknetzen, angebotenen Funktionen ist häufig an die Voraussetzung geknüpft, daß dem Netz die Rufnummer des Dienstenutzers bekannt ist. Die Rufnummer des Dienstenutzers, bei GSM-Teilnehmern die MSISDN (Mobile Subscriber ISDN Number), wird insbesondere benötigt um zu überprüfen, ob der rufende Teilnehmer zur Nutzung der Funktion berechtigt ist, und um Gebührenrecords für die Nutzung von Diensten zu Lasten des Dienstenutzers anzulegen.

Das Problem, dem Netz die Rufnummer des Dienstenutzers bereitzustellen, tritt aktuell auf im Zusammenhang mit der Einführung der sogenannten Intelligent Network Dienste im GSM-Netz. Nur bei der Nutzung dieser Dienste durch im entsprechenden GSM-Netz registrierte Mobilteilnehmer kann die Bereitstellung der Rufnummer des Dienstenutzers durch das Signalisierungsprotokoll vorausgesetzt werden. Bei allen anderen Verbindungsursprüngen, z.B. von einem Festnetz aus, ist die Rufnummer des Dienstenutzers in Knoten des entsprechenden GSM-Netzes häufig nicht verfügbar, da sie entweder im Ursprung nicht korrekt aufgesetzt wird oder an Netzübergängen verlorengeht. Es ist somit keine oder keine zuverlässige Authentisierung des Teilnehmers möglich.

Aus der WO-A-95/21509 ist ein Verfahren und eine Anordnung zur Handhabung und Prüfung von ergänzenden Diensten für eine Mobilstation beschrieben. Das Verfahren beruht dabei auf einer Administration von durch das Heimatregister (HLR) eines Mobilfunknetzes adressierbaren Diensten über einen beliebigen Telefonanschluß. Dazu kann sich der Teilnehmer durch Eingabe seiner Mobiltelefonnummer und einer Geheimzahl (PIN) gegenüber dem HLR authentisieren und auf die Daten im HLR zugreifen und im Netz angebotene Dienste, wie z.B. eine Rufumleitung, einrichten oder löschen. Ein Zugang zu Mehrwertdiensten, wie z.B. Börsennachrichten, Wettervorhersagen etc., ist mit dem hier beschriebenen Verfahren nicht möglich, da hier keine Trennung zwischen Authentisierungsprozedur und zu nutzenden Diensten gegeben ist, sondern Authentisierung und Dienst in der selben Instanz (HLR) angeordnet sind.

Die US-A-5,181,238 beschreibt einen authentisierten Zugangsdienst für Kommunkikationsdienstleistungen zwischen Teilnehmern eine Kommunikationsnetzes und verschiedenen Diensteanbietern, wie z.B. Banken, Börsenagenten etc. Es ist eine Teilnehmerdatenbank eingerichtet, bei der sich die Teilnehmer authentisieren müssen, um Zugriff auf die Angebote der Diensteanbieter zu erhalten.

Die Aufgabe der vorliegenden Erfindung besteht daher darin, ein neuartiges Verfahren zur Authentisierung von Teilnehmern eines digitalen Mobilfunknetzes vorzuschlagen, welches eine unbedingte Teilnehmeridentifikation und - authentisierung bei Nutzung von verschieden Diensten des Mobilfunknetzes erlaubt.

Diese Aufgabe wird durch die kennzeichnenden Merkmale des Patentanspruchs 1 gelöst.

Die hierin beschriebene Selbstidentifizierung und Authentisierung ist vorzugsweise für Teilnehmer von GSM-Netzen anwendbar.
Die Selbstidentifizierung und anschließende Authentisierung eines GSM-Teilnehmers kann von einem beliebigen Telekommunikationsnetz aus erfolgen und ist nicht an die Verwendung eines GSM-SIM (Subscriber Identification Module) gebunden.

Das vorgeschlagene Verfahren erlaubt eine Teilnehmeridentifikation und
- authentisierung vorzugsweise für die Nutzung von Sprachdiensten, kann aber auch bei Nicht-Sprachanwendungen, insbesondere für den Zugriff des rufenden Teilnehmers auf ausgewählte Parameter seines HLR (Heimatregister) aus einem Nicht-GSM-Netz heraus, eingesetzt werden.
Die dialogorientierte Selbstidentifizierung und Authentisierung des rufenden Teilnehmers basiert auf in-band DTMF-Signalisierung durch manuelle Eingabe seiner Rufnummer (MSISDN) und einer persönlichen Geheimzahl (PIN).

Für die hierin beschriebenen Rufszenarien wird vorausgesetzt, daß der rufende Teilnehmer durch die Wahl einer Dienstzugangszahl Zugang zu einem speziellen, im GSM-Mobilfunknetz angebotenen Dienst erlangen möchte.

Erfindungsgemäß werden die vom Teilnehmer angewählten Dienstzugangszahlen von den Vermittlungsknoten des entsprechenden GSM-Netzes als solche erkannt. Die Erkennung einer Dienstzugangszahl bewirkt die automatische Aktivierung einer Dienstelogik (Service Logic) für die Behandlung des Rufes. Die Service Logic prüft automatisch das Vorhandensein der Rufnummer des rufenden Teilnehmers in der Rufaufbaunachricht (Initial Address Message - IAM). Wird die Rufnummer des Dienstenutzers nicht durch das Signalisierungsprotokoll bereitgestellt, erfolgt durch die Service Logic die automatische Verbindung des rufenden Teilnehmers mit einer Netzfunktion zur Selbstidentifizierung und Authentisierung. Nach erfolgreicher Authentisierung wird der Teilnehmer durch die Service Logic automatisch mit dem angewählten Dienst verbunden.

An die Stelle einer gewählten Dienstzugangszahl kann die Subscription von Intelligent Network Diensten durch den rufenden Teilnehmer treten. Die Subscription von Intelligent Network Diensten bewirkt, unabhängig von der gewählten Rufnummer, immer die Aktivierung einer Service Logic im Zuge des Verbindungsaufbaus.

Gegenstand der vorliegenden Erfindung ist also die Realisierung von Netzfunktionen, bei denen
- bei Anwahl bestimmter Dienstzugangszahlen durch Netzknoten des GSM-Netzes geprüft wird, ob die MSISDN des rufenden Teilnehmers korrekt vorhanden ist,
- der rufende Teilnehmer zur manuellen Eingabe seiner MSISDN aufgefordert wird, wenn diese nicht durch das Signalisierungsprotokoll bereitgestellt wurde,
- die manuell eingegebene MSISDN durch nachfolgende Eingabe einer PIN authentisiert wird,
- der rufende Teilnehmer nach erfolgreicher Authentisierung automatisch mit dem angewählten Dienst verbunden wird,
- die Verbindung zum rufenden Teilnehmer bei Fehlschlag der Authentisierung automatisch ausgelöst wird.

Die Prozeduren für die Selbstidentifizierung eines Teilnehmers durch Eingabe der MSISDN und deren anschließende Authentisierung anhand einer PIN werden innerhalb des GSM-Netzes erfindungsgemäß realisiert durch das Zusammenwirken des Intelligent Network System (INS) mit dem Interactive Voice Response System (IVR).
Das IVR stellt eine Verbindung zum Voice Mail System (VMS) her, wo die Gültigkeit der vom Teilnehmer eingegebenen PIN für die zur Selbstidentifizierung verwendete MSISDN geprüft wird. Diese Prüfung ist eine bestehende Funktion des VMS für die Prüfung der Zugangsberechtigung zur persönlichen MobilBox. Die generelle Nutzung des VMS für die Selbstidentifizierung und Authentisierung des Teilnehmers als Voraussetzung für den Zugang zu Diensten erspart die nochmalige Implementierung von Teilnehmerdatenbanken, Prozeduren und Administrationsschnittstellen ähnlich denen des VMS in anderen Netzknoten. Die Selbstidentifizierung eines Teilnehmers durch manuelle Eingabe seiner Rufnummer und die anschließende Authentisierung anhand einer vom rufenden Teilnehmer eingegebenen PIN ist aufgrund der für diese Prozedur benutzten Datenressourcen nur für Teilnehmer des entsprechenden Mobilfunknetzes möglich.

Die Notwendigkeit der Teilnehmerauthentisierung durch manuelle Eingabe von MSISDN und PIN wird durch das INS erkannt. Dies setzt die Wahl einer speziellen Rufnummer oder die Subscription eines Intelligent Network Dienstes durch den rufenden Teilnehmer voraus.

Da im INS keine teilnehmerspezifischen Daten vorliegen, die die Authentisierung einer durch den rufenden Teilnehmer eingegebenen MSISDN anhand der nachfolgend eingegebenen PIN erlauben, werden die eingegebene MSISDN und die PIN zum Interactive Voice Response System (IVR) übertragen. Dies geschieht durch in-band DTMF-Signalisierung zwischen dem Endgerät des rufenden Teilnehmers und dem IVR.
Nach Empfang von MSISDN und PIN baut das IVR eine Testverbindung zum Voice Mail System (VMS) auf. Aufgrund der gespeicherten Teilnehmerdaten kann das VMS die Gültigkeit der MSISDN prüfen und die MSISDN anhand der PIN authentisieren.
Das Ergebnis der Authentisierungsprozedur wird vom IVR zum INS signalisiert. Nach erfolgreichem Abschluß der Authentisierungsprozedur initiiert das INS die für die Nutzung der vom rufenden Teilnehmer gewünschten Netzfunktion erforderlichen Prozeduren.
Ein Fehlschlag der Teilnehmerauthentisierung führt zum Rückwärtsauslösen der aufgebauten Sprachverbindung zum rufenden Teilnehmer.

Die Notwendigkeit der Selbstidentifizierung und Authentisierung des rufenden Teilnehmers durch manuelle Eingabe von MSISDN und PIN besteht nicht,
- wenn die Verbindung aus einem GSM-Netz unter Verwendung eines GSM-SIM aufgebaut wurde und
- die MSISDN des rufenden Teilnehmers durch das GSM-Netz aufgesetzt und im Signalisierungsprotokoll unverfälscht bis zum auswertenden Netzknoten übertragen wurde.

Die Aktivierung einer PIN für die Selbstidentifizierung und Authentisierung des rufenden Teilnehmers durch manuelle Eingabe von MSISDN und PIN soll erfolgen, indem
- der Teilnehmer unter Verwendung seines eigenen GSM-SIM eine spezielle Rufnummer anwählt,
- im Zuge einer dialogorientierten Abfrage eine PIN eingibt und diese durch Wiederholung der Eingabe bestätigt,
- die für die Aktivierung der PIN aufgebaute Verbindung beendet wird.

Folgende Elemente des verwendeten GSM-Mobilfunknetzes sind an der erfindungsgemäßen Authentisierungsprozedur beteiligt:

### Service Control Point (SCP)

Die Teilnehmerauthentisierung durch manuelle Eingabe von MSISDN und PIN setzt die Verbindung des rufenden Teilnehmers mit dem Interactive Voice Response System (IVR) voraus. Hergestellt wird diese Verbindung, wenn eine Zugangszahl zu Netzfunktionen gewählt wird, deren Nutzung die Identifikation des rufenden Teilnehmers voraussetzt und die benötigten Informationen nicht durch die Signalisierung bereitgestellt wurden. Der rufende Teilnehmer wählt nicht das IVR, sondern einen bestimmten, im Netz angebotenen, Dienst an.
Ob die Identifizierung und Authentisierung des rufenden Teilnehmers erforderlich ist, kann unabhängig von der gewählten Rufnummer immer geprüft werden, wenn der Teilnehmer einen Intelligent Network Service subscribiert hat.
Ist mindestens eine dieser Bedingungen, Wahl einer speziellen Rufnummer oder Subscription eines Intelligent Network Service durch den rufenden Teilnehmer, erfüllt, erfolgt im Zuge des Verbindungsaufbaus der Zugriff auf den SCP. Im SCP sind Funktionen für die Steuerung des Verbindungsaufbaus, die Service Logic, implementiert.
Die Service Logic prüft, ob die für die Identifizierung des rufenden Teilnehmers benötigte MSISDN verfügbar ist, d.h. ob die MSISDN im Signalisierungsprotokoll für den Verbindungsaufbau bereitgestellt wurde. Ist dies nicht der Fall, steuert die Service Logic den Auf- und Abbau der Verbindung zum IVR.
Nach der Selbstidentifizierung und erfolgreichen Authentisierung des rufenden Teilnehmers steuert die Service Logic den Verbindungsaufbau zu der vom Teilnehmer gewünschten Netzfunktion.
Bei Fehlschlag der manuellen Teilnehmerauthentisierung steuert die Service Logic das Anlegen einer entsprechenden Ansage zum rufenden Teilnehmer und initiiert anschließend den Verbindungsabbau in Rückwärtsrichtung.

### Signaling Switching Point (SSP)

Der SSP ist eine Vermittlungseinrichtung mit einem Protokollinterface zum SCP. SSP und SCP kommunizieren über das INAP-Protokoll.
Die SSP-Funktionalität ist in die MSCs des Mobilfunknetzes integriert. MSCs mit SSP-Funktionalität werden als M-SSPs bezeichnet.
Der M-SSP erkennt anhand der gewählten Zielrufnummer in der Rufaufbaunachricht (Initial Address Message - IAM), ob ein Zugriff auf den SCP erforderlich ist. Ist dies der Fall, werden vom M-SSP alle Informationselemente aufgesetzt, die dem SCP die Identifizierung der für die Rufbehandlung benötigten Service Logic ermöglichen.

Wird der Zugriff auf den SCP nicht durch die gewählte Zielrufnummer, sondern durch Subscription eines Intelligent Network Service ausgelöst, muß der M-SSP identisch mit dem serving MSC/VLR des rufenden Teilnehmers sein.
Erkennt der SCP die Notwendigkeit des Verbindungsaufbaus zum Interactive Voice Response System (IVR), werden die für die Verbindungssteuerung erforderlichen Informationen an den M-SSP übergeben. Im M-SSP erfolgt die Durchschaltung der Verbindung zum IVR.
Im M-SSP integriert sind Baugruppen für das Anlegen von Ansagen (Intelligent Periphery - IP). Im Zusammenhang mit der manuellen Teilnehmerauthentisierung wird vom M-SSP lediglich bei Fehlschlag der Authentisierung eine Ansage zum Dienstenutzer angelegt.

### Interactive Voice Response System (IVR)

Das IVR und das Endgerät des rufenden Teilnehmers sind über eine Sprachverbindung verbunden. Das IVR realisiert die Benutzerführung für die Authentisierungsprozedur. Die Übertragung von MSISDN und PIN vom Endgerät des rufenden Teilnehmers zum IVR erfolgt mittels in-band DTMF-Signalisierung. Nach Empfang von MSISDN und PIN baut das IVR eine Testverbindung zum Voice Mail System (VMS) auf. Das Resultat der Testverbindung wird zum INS zurückgemeldet.

### Voice Mail System (VMS)

Das VMS überprüft, ob die vom rufenden Teilnehmer eingegeben Rufnummer eine gültige MSISDN ist. Ist dies der Fall, wird die vom rufenden Teilnehmer eingegebene PIN mit der im VMS gegen diese MSISDN gespeicherten PIN verglichen.
Das VMS meldet dem IVR zurück, ob eine gültige MSISDN empfangen wurde und ob diese durch die empfangene PIN authentisiert ist.

Erfindungsgemäß gibt es für die Verwendung und Aktivierung der PIN zur Authentisierung folgende Möglichkeiten:

### Aktivierung der PIN unabhängig von der Nutzung eines speziellen Dienstes

Die Prozedur für die Aktivierung der PIN wird gestartet, wenn der Teilnehmer unter Verwendung seines SIM eine spezielle Rufnummer anwählt. Die Verwendung des SIM stellt sicher, daß die für die Identifizierung des Teilnehmers benötigte MSISDN im Signalisierungsprotokoll des GSM-Netzes aufgesetzt wird.

Prinzipiell kann die anzuwählende spezielle Rufnummer für unterschiedliche Dienste variieren.

Die Aktivierung der PIN erfolgt im VMS, der rufende Teilnehmer wird für die Aktivierungsprozedur mit dem IVR verbunden. Die Verbindung zum IVR wird anhand der vom Teilnehmer gewählten speziellen Rufnummer hergestellt, die Funktionalität des Intelligent Network System wird für die Herstellung dieser Verbindung nicht zwingend benötigt.

Das IVR erzeugt die für die dialogorientierte Aktivierung der PIN benötigten Ansagen.

Die vom Signalisierungsprotokoll aufgesetzte MSISDN des Teilnehmers wird im VMS auf ihre Gültigkeit überprüft. Wird die MSISDN durch das Signalisierungsprotokoll nicht bereitgestellt oder wird die bereitgestellte MSISDN im VMS als ungültig erkannt, ist die Prozedur zur Aktivierung der PIN nicht durchführbar und die Verbindung zum rufenden Teilnehmer wird ausgelöst.

Durch Auswertung der vom Teilnehmer gewählten speziellen Rufnummer kann das VMS die Aktivierungsprozedur der PIN einem oder mehren speziellen Diensten zuordnen.

Wurde die vom Signalisierungsprotokoll bereitgestellte MSISDN im VMS als gültig erkannt, erfolgt die dialogorientierte Abfrage der PIN des rufenden Teilnehmers. Zur Verifizierung der vom Teilnehmer eingegebenen PIN im VMS wird die PIN ein zweites Mal abgefragt. Stimmen beide PIN-Eingaben des Teilnehmers überein, wird die PIN im VMS abgespeichert.

Bei Nicht-Übereinstimmung der PIN-Eingaben des Teilnehmers beginnt die Abfrage der PIN von vom. Die Anzahl der Wiederholungen dieser Prozedur ist vom Netzbetreiber einstellbar.

Nach erfolgreicher Abspeicherung der aktivierten PIN bzw. bei Überschreitung der maximalen Anzahl von Wiederholungen der Eingabeprozedur wird die Verbindung zum rufenden Teilnehmer beendet. Nach erfolgreicher Aktivierung der PIN ist die Nutzung eines Dienstes unter Selbstidentifizierung und Authentisierung des Dienstenutzers im Zuge einer neu aufgebauten Verbindung möglich.

### Aktivierung der PIN spezifisch für einzelne Dienstzugangszahlen

Prinzipiell ist es möglich, für die Aktivierung der PIN dieselbe Dienstzugangszahl zu wählen, unter der nach erfolgreicher Aktivierung die an diese PIN gebundenen Dienste erreicht werden.
Die Prozedur für die Aktivierung der PIN für eine bestimmt Dienstzugangszahl wird gestartet, wenn ein Teilnehmer diese Dienstzugangszahl anwählt und erstmals seine MSISDN nicht durch das Signalisierungsprotokoll bereitgestellt wird.
Die Aktivierung der PIN erfolgt im VMS, der rufende Teilnehmer wird für die Aktivierungsprozedur in der erfindungsgemäß beschriebenen Weise mit dem IVR verbunden. Für jede Dienstzugangszahl, für die eine separate Aktivierung der PIN erforderlich ist, setzt der M-SSP eine eigene "Dienste_MSISDN" für den Aufbau der Verbindung zum IVR auf.
Nach Eingabe der MSISDN durch den rufenden Teilnehmer wird im VMS wird erkannt, ob für die Kombination Teilnehmer_MSISDN/Dienste_MSISDN die Aktivierung der PIN bereits erfolgt ist. Ist dies nicht der Fall, wird eine entsprechende Ansage zur Benutzerführung zum rufenden Teilnehmer angelegt. Der rufende Teilnehmer hat die Möglichkeit, die Aktivierungsprozedur abzubrechen. Nach erfolgreicher Aktivierung der PIN kann durch Signalisierung des VMS zum IVR und von dort zum M-SSP die Rückwärtsauslösung der Verbindung eingeleitet werden.
Dieses Verfahren der Aktivierung einer PIN für einzelne Dienstzugangszahlen hat den Vorteil, daß der unbefugte Zugang zu Diensten durch manuelle Eingabe einer MSISDN und der zugehörigen PIN solange ausgeschlossen ist, wie der Inhaber der MSISDN nicht selbst eine PIN unter Verwendung seines GSM-SIM aktiviert hat. Der Teilnehmer selbst kann über die Aktivierung einer PIN für jede Dienstzugangszahl einzeln entscheiden.
Solange ein Teilnehmer keine PIN aktiviert hat, ist der Zugriff auf Dienste unter einer speziellen Dienstzugangszahl, die eine Teilnehmeridentifikation erfordert, nur möglich, wenn die MSISDN des rufenden Teilnehmers vom Signalisierungsprotokoll im M-SSP bereitgestellt wird.
Ob der Teilnehmer für den Zugriff auf unterschiedliche Netzfunktionen immer dieselbe PIN oder unterschiedliche PINs verwendet, sollte im Ermessen des Teilnehmers verbleiben.
Die Deaktivierung einer aktivierten PIN durch den Teilnehmer soll möglich sein. Solange der Teilnehmer im entsprechenden Mobilfunknetz registriert ist, kann von der Bereitstellung seiner MSISDN durch das Signalisierungsprotokoll ausgegangen werden. Nach Deaktivierung der PIN ist der Dienstezugang für eine bestimmte MSISDN nur unter Verwendung des entsprechenden GSM-SIM möglich.
Die Deaktivierung der PIN könnte in der Weise erfolgen, daß die Verwendung einer Folge identischer Ziffern als PIN nicht zulässig ist. Das VMS erlaubt die Eingabe einer solchen "ungültigen" PIN unter Verwendung des GSM-SIM, lehnt diese PIN aber für die Authentisierung des Teilnehmers ab. Eine Authentisierung durch manuelle Eingabe von MSISDN und PIN ist erst nach Änderung der deaktiverten, d.h. "ungültigen" PIN unter Verwendung des GSM-SIM möglich. Während der Aktivierungsprozedur der PIN wird eine vorher im Zuge der Deaktivierung gespeichert "ungültige" PIN nicht überprüft.

Für das VMS ergeben sich aus dieser Lösung folgende Anforderungen:
- Das VMS muß die Verwaltung von mehr als einer PIN pro Teilnehmer erlauben.
- Es wird eine teilnehmerindividuelle eindeutige Zuordnung jeder PIN zu genau einer "Dienste_MSISDN" gefordert. Für den Zugriff auf die persönliche MobilBox lautet diese "Dienste_MSISDN" "17x <Teilnehmernummer>", wobei die "Teilnehmernummer" die dem Teilnehmer zugeordnete Rufnummer entspricht. Entsprechend muß für jede Dienstzugangszahl des GSM-Netzes im VMS eine "Dienste_MSISDN" "17x <SpezielleNummer>" existieren.
- Zugriff auf genau eine der für einen Teilnehmer gespeicherten PINs abhängig von der Called Address ("Dienste_MSISDN") in der Rufaufbaunachricht (IAM) zum VMS.
- Unterscheidung zwischen aktivierter PIN und deaktivierter/Default PIN, Erzwingung der Aktivierung einer PIN als Voraussetzung für weitere Benutzerzugriffe, wenn eine deaktivierte/Default PIN gespeichert ist.
- Anlegen der Ansagen für die dialogorientierte Benutzerführung für die Aktivierung und Deaktivierung der PIN.
- Speicherung der vom Teilnehmer durchgeführten Aktionen zur - Aktivierung/Deaktivierung der PIN in teilnehmerindividuellen Event-Records.

### Verwendung der für den Zugang zur persönlichen MobilBox festgelegten PIN

Die PIN für die Authentisierung einer manuell eingegebenen MSISDN kann generell identisch mit der PIN für den Zugriff auf die persönliche MobilBox sein. Damit ist die einzige Voraussetzung für eine Teilnehmerauthentisierung durch manuelle Eingabe von MSISDN und PIN, daß der jeweilige Teilnehmer seine MobilBox bereits personalisiert hat. Eine spezielle Aktivierung derselben PIN für die Nutzung von Diensten unterschiedlich von der Abfrage der persönlichen MobilBox bringt kaum Sicherheitsvorteile. Bei Offenlegung dieser einzigen vorhandenen PIN ist bis zu ihrer Modifizierung durch den Teilnehmer der unberechtigte Zugriff auf alle an diese PIN gebundenen Dienste möglich.
Die Personalisierung der persönlichen MobilBox kann für alle Teilnehmer des betreffenden GSM-Netzes als gegeben vorausgesetzt werden. Damit wird die beschriebene Möglichkeit der Selbstidentifizierung und Authentisierung durch manuelle Eingabe von MSISDN und PIN automatisch für alle Teilnehmer wirksam.

Weitere Einzelheiten und Merkmale der Erfindung ergeben sich aus der nachfolgenden Beschreibung zweier spezieller Ausführungsbeispiele anhand der Flußdiagramme: Dabei zeigt:
- Figur 1: eine erste Ausführungsform der Erfindung mit Anbindung des IVR ausschließlich über ISUP-Signalisierung;
- Figur 2: eine weitere Ausführungsform der Erfindung mit Einbindung des IVR in das INS als zentralisierte Intelligente Peripherie (IP).

Die Einbindung des Interactive Voice Response System (IVR) in einen Verbindungsaufbau über das INS zum Zweck der Teilnehmeridentifizierung und - authentisierung wird nun anhand zweier Ausführungsbeispiele beschrieben:
1. Anbindung des IVR ausschließlich über ISUP-Signalisierung,
2. Einbindung des IVR in das INS als Centralized Intelligent Periphery (Centralized IP).
Beispielhaft wird in den nachfolgenden Szenarien für diese beiden Alternativen davon ausgegangen, daß der rufende Teilnehmer z.B. eine Zielrufnummer [+49] [171] 2500 wählt.
Die "2500" sei beispielhaft als Dienstzugangszahl genannt. Durch "2500" wird generell im SSP der Zugriff zum SCP getriggert. Dort wird die Dienstelogik (Service Logic) für den angewählten Dienst aktiviert. Empfängt der SCP vom SSP keine Rufnummer (MSISDN) als Teilnehmerrufnummer des anrufenden Teilnehmers, steuert die Service Logic den Aufbau einer ISUP-Verbindung vom M-SSP zum IVR.
Über diese ISUP-Verbindung ist das Endgerät des rufenden Teilnehmers mit dem IVR verbunden, wobei der M-SSP als Transitknoten fungiert. Unabhängig vom Verbindungsursprung des rufenden Teilnehmers setzt der SCP eine feste Zielrufnummer z.B. (171 056x <spezielle Nummer>) zum IVR auf. Anhand dieser Zielrufnummer wird die vom IVR zum rufenden Teilnehmer anzulegende Ansage bestimmt.

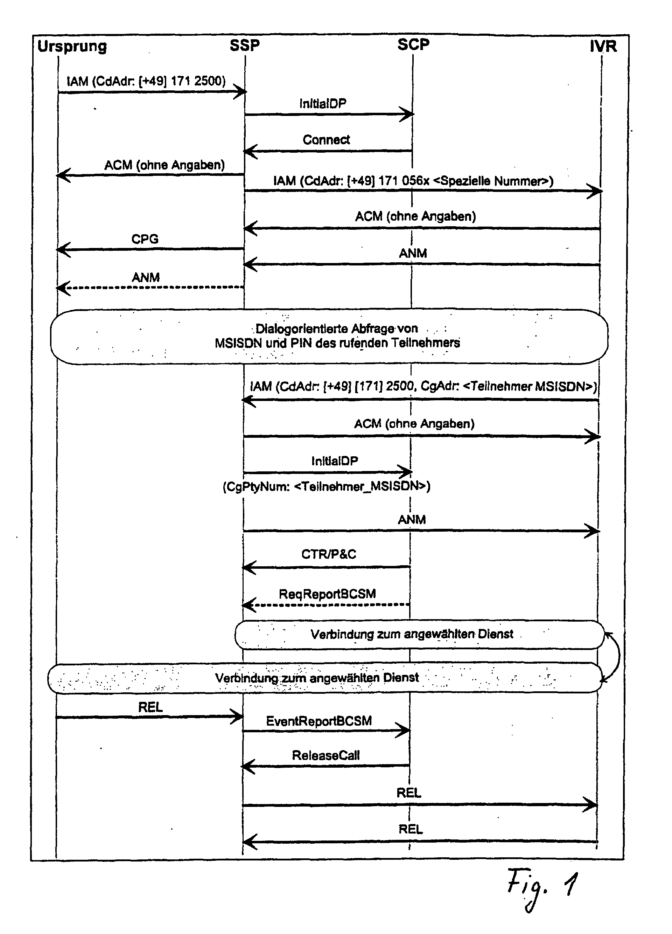

Anhand von Figur 1 wird nun die Anbindung des IVR über ISUP-Signalisierung beschrieben.
Mit der Connect Nachricht vom SCP zum SSP, die das Senden der IAM zum IVR bewirkt, wird die Dienstelogik im SCP verlassen.
Die erfolgreiche Identifizierung und Authentisierung des rufenden Teilnehmers wird vom IVR zum M-SSP durch Senden einer IAM quittiert. Nach Senden der Answer Nachricht vom SSP ist der rufende Teilnehmer über die Schleife SSP-IVR-SSP mit dem SSP über eine Sprachverbindung verbunden.
Der M-SSP empfängt eine IAM, z.B. mit der Zielrufnummer "2500" und der MSISDN des Dienstenutzers als CallingPartyAddress. Der Empfang der Zielrufnummer "2500" triggert wiederum eine Nachricht zum SCP (InitiaIDP). Hierdurch erfolgt der erneute Eintritt in die Dienstelogik (Service Logic).
Im SCP wird die vom M-SSP in der InitialDP empfangene MSISDN des Dienstenutzers als gültig erkannt. Im Beispiel wurde mit der "2500" ein bestimmter Dienst angewählt. Entsprechend wird vom SCP die Verbindung des rufenden Teilnehmers mit den Ressourcen des Dienstes initiiert (CTR/P&C).
Im Flußdiagramm ist die Auslösung der Verbindung durch den rufenden Teilnehmer dargestellt (Auslösen in Vorwärtsrichtung). Nicht dargestellt ist das Verhalten bei Fehlschlag der Authentisierungsprozedur. In diesem Fall soll das IVR anstelle der IAM eine Release Message mit einem signifikanten Release Cause zum M-SSP zurücksenden. Im M-SSP wird eine Ansage zum rufenden Teilnehmer angelegt und die Verbindung anschließend in Rückwärtsrichtung ausgelöst.

Diese Realisierungsvariante der Teilnehmeridentifizierung und -authentisierung ist durch die ausschließliche Nutzung der ISUP-Signalisierung zwischen M-SSP und IVR gekennzeichnet.

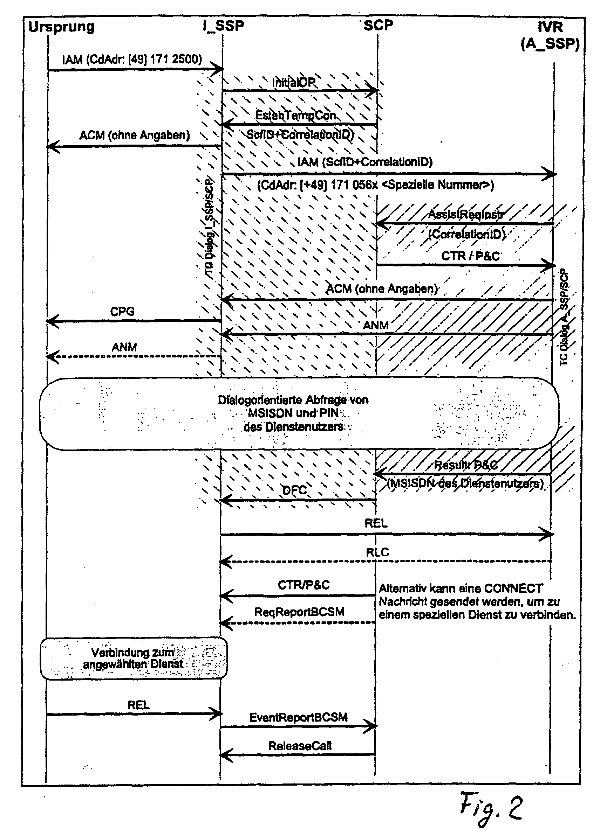

Anhand Figur 2 wird im folgenden die Einbindung des IVR in das INS als Centralized Intelligent Periphery (IP) beschrieben
Diese weitere Ausführungsform der Erfindung erfordert die Implementierung des vollständigen INAP Protocol Stack im IVR. Neben dem Nachrichtenübertragungsteil (MTP) umfaßt dieser Signaling Connection Control Part (SCCP) (class 0 or 1), TCAP und INAP.

Mit der Implementierung des INAP Protocol Stack im IVR wird dieses als Centralized IP in das INS eingebunden. Die Nutzung des Centralized IP ist nicht auf die Teilnehmeridentifikation und -authentisierung beschränkt; diese stellt lediglich eine spezielle Anwendung dar.

Bezüglich des Zugangs zu sprachbasierten Intelligent Network Diensten wird durch die Anschaltung des IVR als Centralized IP der Nachteil vermieden, daß die Sprachverbindung zum angewählten Dienst über das IVR geschleift wird. Weiterhin ist im Unterschied zur Anbindung des IVR ausschließlich über ISUP-Signalisierung bei dieser Ausführungsform ein einziger Aufruf der Dienstelogik erforderlich, um sowohl die Selbstidentifizierung und Authentisierung des Dienstenutzers wie auch die anschließende Verbindung zum angewählten Dienst zu steuern.

Die Durchwahlfähigkeit zu einem Dienst über den einheitlichen Dienstezugang bleibt auch dann erhalten, wenn eine Teilnehmerauthentisierung im IVR/VMS erforderlich war.
Im Flußdiagramm wird von der Anwahl des Einheitlichen Zugangs zu Mehrwertdiensten über die "2500" ausgegangen. Der M-SSP, in dem die "2500" als Trigger für den Zugriff auf den SCP erkannt wird, fungiert als Initiating SSP (I-SSP). Im Unterschied zur Anbindung des IVR ausschließlich über das ISUP-Protokoll wird das IVR jetzt als Assisting SSP (A_SSP) angesprochen. Bei Herstellung der Verbindung zum A_SSP (IVR) wird die Service Logic im SCP nicht verlassen. Die vom I_SSP (M-SSP) zum A_SSP (IVR) geschickt IAM enthält die zusätzlichen Parameter "ServiceControlFunctionlD" und "CorrelationID".
Der Empfang der IAM triggert im A_SSP (IVR) einen SCP-Zugriff mit "AssistRequestlnstruction". Der SCP steuert jetzt das Anlegen der Ansage zum rufenden Teilnehmer (CTR/P&C) im A_SSP (IVR). Der Ansagetext wird durch die in der IAM empfangene Called Address (171 056x <spezielle Nummer>) bestimmt.
Nach der bidirektionalen Durchschaltung der ISUP-Verbindung werden MSISDN und PIN vom Endgerät des rufenden Teilnehmers zum A_SSP (IVR) übertragen. Die erfolgreiche Teilnehmerauthentisierung wird vom A_SSP zum SCP mittels der P&C Result Message mit der MSISDN des rufenden Teilnehmers signalisiert.
Für den im Flußdiagramm nicht dargestellten Fall eines Fehlschlags Teilnehmerauthentisierung muß die P&C Result Message einen anderen, signifikanten Wert enthalten.

Bei Empfang einer P&C Result Message triggert der SCP immer zuerst eine Prozedur zum Auslösen der ISUP-Verbindung zwischen I_SSP (M-SSP) und A_SSP (IVR) (DFC - DisconnectForwardConnection).
Die Verbindung des Dienstenutzers mit Ressourcen für die Nutzung des angewählten Dienstes wird durch die Dienstelogik im SCP gesteuert.

Im Flußdiagramm dargestellt ist das Auslösen der Verbindung in Vorwärtsrichtung durch den rufenden Teilnehmer.
Nicht dargestellt ist das Auslösen in Rückwärtsrichtung vom SSP zum rufenden Teilnehmer im Falle eines Fehlschlags der Authentisierung. Dieser Fall muß durch einen signifikanten Parameter in der P&C Result Message angezeigt werden. Im Anschluß an das Auslösen der Verbindung vom I_SSP (M-SSP) zum A_SSP (IVR) mittels der Disconnect Forward Connection Prozedur (DFC) initiiert der SCP das Auslösen der Verbindung vom SSP zum rufenden Teilnehmer (Release Call).

### Abkürzungsverzeichnis

- ACM: Address Complete Message (ISUP)
- ANM: ANswer Message (ISUP)
- A_SSP: Assist Signaling Switching Point (INS)
- CdAdr: Called Address
- CPG: Call ProGress message (ISUP)
- CTR: Connext To Ressource message (INAP)
- DFC: Disconnect Forward Connection message (INAP)
- GSM-MAP: GSM Mobile Application Part
- HLR: Home Location Register
- IAM: Initial Address Message (ISUP)
- INAP: Intelligent Network Application Part
- INS: Intelligent Network System
- IP: Intelligent Periphery (INS)
- I_SSP: Initiating Signaling Switching Point (INS)
- ISUPlsdn: User Part
- IVR: Interactive Voice Response system
- MSISDN: Mobile Subscriber ISDN number
- M-SSP: Mobile services switching centre with SSP functionality (INS)
- P&C: Prompt and Collect message (INAP)
- PIN: Personal Identification Number
- REL: RELease message (ISUP)
- RLC: ReLease Complete message (ISUP)
- SCCP: Signalling Connection Control Part
- ScflD: Service control function IDentity
- SCP: Signaling Control Point (INS)
- SIM: Subscriber Identification Modul
- SSP: Signaling Switching Point (INS)
- TAP: Transferred Account Procedure
(Verfahren zur Übermittlung von Gebührendaten zwischen Netzbetreibem)
- TCAP: Transaction Capabilities Application Part
- VMS: Voice Mail System

## Patentansprüche

1. Verfahren zur Authentisierung von Teilnehmern eines digitalen Mobilfunknetzes, wobei das Mobilfunknetz die Funktionalität eines Intelligent Network Systems (INS) besitzt, sowie ein Interactive Voice Response System (IVR) und ein Voice Mail System (VMS) umfasst,
wobei bei Anwahl eines speziellen, im Mobilfunknetz angebotenen Dienstes durch Wahl einer Dienstzugangszahl durch den Teilnehmer diese Dienstzugangszahl von dem für den Rufaufbau zuständigen Vermittlungsknoten des Mobilfunknetzes als solche erkannt wird,
daß die Erkennung der Dienstzugangszahl eine automatische Aktivierung einer Dienstelogik für die Behandlung des Rufes bewirkt, welche automatisch das Vorhandensein der Rufnummer (MSISDN) des rufenden Teilnehmers in der Rufaufbaunachricht (IAM) prüft,
daß bei Nicht-Bereitstellung der Rufnummer (MSISDN) des Teilnehmers in der Rufaufbaunachricht (IAM) über die Dienstelogik die automatische Verbindung des rufenden Teilnehmers mit einer geeigneten Netzfunktion zur Selbstidentifizierung und Authentisierung erfolgt, wobei die Prozeduren für die Selbstidentifizierung und Authentisierung des Teilnehmers durch das Zusammenwirken des Intelligent Network System (INS) mit einem Interactive Voice Response System (IVR) realisiert werden, indem eine Aufforderung des Teilnehmers durch das Intelligent Network System (INS) zur manuellen Eingabe seiner Rufnummer (MSISDN) und einer persönlichen Geheimzahl (PIN) erfolgt,
wobei die vom Teilnehmer eingegebene Rufnummer (MSISDN) und die persönliche Geheimzahl (PIN) vom Intelligent Network System (INS) zum Interactive Voice Response System (IVR) übertragen werden,
und das Interactive Voice Response System (IVR) nach Empfang der eingegebenen Rufnummer (MSISDN) und persönlichen Geheimzahl (PIN) eine Testverbindung zum Voice Mail System (VMS) aufbaut, und das Voice Mail System (VMS) aufgrund der gespeicherten Teilnehmerdaten die Gültigkeit der Rufnummer (MSISDN) prüft und diese anhand der persönlichen Geheimzahl (PIN) authentisiert, und
das Ergebnis der Authentisierungsprozedur vom Interactive Voice Response System (IVR) zum Intelligent Network System (INS) signalisiert wird,
und nach erfolgreichem Abschluß der Authentisierungsprozedur das Intelligent Network System (INS) die für die Nutzung der vom rufenden Teilnehmer gewünschten Netzfunktion erforderlichen Prozeduren initiiert und den Teilnehmer automatisch mit dem angewählten Dienst verbindet.

2. Verfahren nach Anspruch 1, **dadurch gekennzeichnet, daß** die Dienstlogik im Intelligent Network System (INS) des Mobilfunknetzes implementiert ist.

3. Verfahren nach Anspruch 1 oder 2, **dadurch gekennzeichnet, daß** eine Übertragung durch in-band DTMF-Signalisierung zwischen dem Endgerät des rufenden Teilnehmers und dem Interactive Voice Response Systems (IVR) erfolgt.

4. Verfahren nach einem der Ansprüche 1-3, **dadurch gekennzeichnet, daß** eine nicht erfolgreiche Teilnehmerauthentisierung zum Rückwärtsauslösen der aufgebauten Sprachverbindung zum rufenden Teilnehmer führt.

5. Verfahren nach einem der Ansprüche 1-4, **dadurch gekennzeichnet, daß** die Anbindung des Interactive Voice Response Systems (IVR) an das Intelligent Network System (INS) über ISUP-Signalisierung erfolgt.

6. Verfahren nach einem der Ansprüche 1-5, **dadurch gekennzeichnet, daß** das Interactive Voice Response System (IVR) als Centralized Intelligent Peripherie in das Intelligent Network System (INS) eingebunden ist.

7. Verfahren nach einem der Ansprüche 1-6, **dadurch gekennzeichnet, daß** an Stelle einer gewählten Dienstzugangszahl die Subscription von Intelligent Network Diensten durch den rufenden Teilnehmer treten kann.

8. Verfahren nach einem der Ansprüche 1-7, **dadurch gekennzeichnet, daß** für eine Aktivierung der persönlichen Geheimzahl (PIN) dieselbe Dienstzugangszahl wählbar ist, unter der nach erfolgreicher Aktivierung die an diese persönliche Geheimzahl (PIN) gebundenen Dienste erreicht werden.

9. Verfahren nach einem der Ansprüche 1-8, **dadurch gekennzeichnet; daß** die Prozedur für die Aktivierung einer persönlichen Geheimzahl (PIN) für eine bestimmt Dienstzugangszahl gestartet wird, wenn ein Teilnehmer diese Dienstzugangszahl anwählt und erstmals seine Rufnummer (MSISDN) nicht durch das Signalisierungsprotokoll bereitgestellt wird.

10. Verfahren nach einem der Ansprüche 1-9, **dadurch gekennzeichnet, daß** die Aktivierung einer persönlichen Geheimzahl (PIN) im Voice Mail System (VMS) erfolgt, wobei der rufende Teilnehmer für die Aktivierungsprozedur mit dem Interactive Voice Response System (IVR) verbunden wird.

11. Verfahren nach einem der Ansprüche 1-10, **dadurch gekennzeichnet, daß** für jede Dienstzugangszahl, für die eine separate Aktivierung einer persönlichen Geheimzahl (PIN) erforderlich ist, der Service Switching Point (M-SSP) eine eigene Diensterufnummer (Dienste_MSISDN) für den Aufbau der Verbindung zum Interactive Voice Response System (IVR) aufsetzt.

12. Verfahren nach einem der Ansprüche 1-11, **dadurch gekennzeichnet, daß** nach Eingabe der Rufnummer (MSISDN) durch den rufenden Teilnehmer im Voice Mail System (VMS) erkannt wird, ob für die Kombination Teilnehmerrufnummer (Teilnehmer_MSISDN) /Diensterufnummer (Dienste_MSISDN) die Aktivierung einer persönlichen Geheimzahl (PIN) bereits erfolgt ist.

13. Verfahren nach einem der Ansprüche 1-12, **dadurch gekennzeichnet, daß** die persönliche Geheimzahl (PIN) zur Authentisierung einer manuell eingegebenen Rufnummer (MSISDN) identisch oder unterschiedlich sein kann zur persönlichen Geheimzahl (PIN) für den Zugriff auf die persönliche MailBox des Teilnehmers.

## Claims

1. Method for authenticating subscribers to a digital cellular radio network, wherein the cellular radio network has the functionality of an intelligent network system (INS), and also includes an interactive voice response system (IVR) and a voice mail system (VMS),
wherein, when the subscriber dials up a special service offered in the cellular radio network by dialling a service access number, this service access number is recognised as such by the switching point of the cellular radio network responsible for establishing the call,
that recognition of the service access number causes automatic activation of a services logical unit for handling the call, which automatically checks for the presence of the telephone number (MSISDN) of the calling subscriber in the initial address message (IAM),
that, if the telephone number (MSISDN) of the subscriber is not provided in the initial address message (IAM), automatic connection of the calling subscriber to a suitable network function for self-identification and authentication is effected via the services logical unit, wherein the procedures for self-identification and authentication of the subscriber are carried out by the cooperation of the intelligent network system (INS) with an interactive voice response system (IVR), by a request to the subscriber being made by the intelligent network system (INS) to manually enter his telephone number (MSISDN) and a personal identification number (PIN),
wherein the telephone number (MSISDN) entered by the subscriber and the personal identification number (PIN) are transmitted from the intelligent network system (INS) to the interactive voice response system (IVR),
and upon reception of the entered telephone number (MSISDN) and personal identification number (PIN) the interactive voice response system (IVR) establishes a test connection with the voice mail system (VMS), and on the basis of the stored subscriber data the voice mail system (VMS) checks the validity of the telephone number (MSISDN) and authenticates it with the aid of the personal identification number (PIN), and
the result of the authentication procedure is signalled by the interactive voice response system (IVR) to the intelligent network system (INS),
and after succession completion of the authentication procedure the intelligent network system (INS) initiates the procedures required for use of the network function desired by the calling subscriber and automatically connects the subscriber to the dialled-up service.

2. Method according to claim 1, **characterised in that** the service logical unit is implemented in the intelligent network system (INS) of the cellular radio network.

3. Method according to claim 1 or 2, **characterised in that** transmission is effected by in-band DTMF signalling between the terminal of the calling subscriber and the interactive voice response system (IVR).

4. Method according to one of claims 1-3, **characterised in that** unsuccessful subscriber authentication leads to release of the voice connection established with the calling subscriber.

5. Method according to one of claims 1-4, **characterised in that** connection of the interactive voice response system (IVR) to the intelligent network system (INS) is effected by ISUP signalling.

6. Method according to one of claims 1-5, **characterised in that** the interactive voice response system (IVR) is connected as a centralised intelligent peripheral to the intelligent network system (INS).

7. Method according to one of claims 1-6, **characterised in that** a dialled service access number can be replaced by subscription to intelligent network services by the calling subscriber.

8. Method according to one of claims 1-7, **characterised in that** for activation of the personal identification number (PIN) the same service access number can be dialled under which, after successful activation, the services connected with this personal identification number (PIN) are reached.

9. Method according to one of claims 1-8, **characterised in that** the procedure for activation of a personal identification number (PIN) for a given service access number is started when a subscriber dials this service access number and for the first time his telephone number (MSISDN) is not provided by the signalling protocol.

10. Method according to one of claims 1-9, **characterised in that** activation of a personal identification number (PIN) is effected in the voice mail system (VMS), the calling subscriber being connected to the interactive voice response system (IVR) for the activation procedure.

11. Method according to one of claims 1-10, **characterised in that**, for each service access number for which separate activation of a personal identification number (PIN) is required, the service switching point (M-SSP) puts up its own services telephone number (services_MSISDN) for establishing the connection with the interactive voice response system (IVR).

12. Method according to one of claims 1-11, **characterised in that** after entry of the telephone number (MSISDN) by the calling subscriber it is recognised in the voice mail system (VMS) whether for the combination of subscriber telephone number (subscriber_MSISDN)/services telephone number (services_MSISDN) the activation of a personal identification number (PIN) has already been effected.

13. Method according to one of claims 1-12, **characterised in that** the personal identification number (PIN) for the authentication of a manually entered telephone number (MSISDN) may be identical or different to the personal identification number (PIN) for access to the personal mailbox of the subscriber.

## Revendications

1. Procédé pour authentifier les abonnés d'un réseau radiotéléphonique mobile numérique, lequel réseau a la fonctionnalité d'un système de réseau intelligent (INS) et comprend un système interactif de réponse vocale (IVR) ainsi qu'un système de messagerie vocale (VMS),
étant précisé que lorsque l'abonné sélectionne un service spécial proposé dans le réseau radiotéléphonique mobile en composant un indicatif d'accès au service, cet indicatif d'accès est reconnu comme tel par le point nodal de commutation dudit réseau qui est compétent pour l'établissement de la communication,
la reconnaissance de l'indicatif d'accès au service provoque une activation automatique d'un système logique de service pour le traitement de la communication, qui vérifie automatiquement la présence du numéro d'appel (MSISDN) de l'abonné appelant dans le message d'établissement de communication (IAM),
si le numéro d'appel (MSISDN) de l'abonné n'est pas fourni dans le message d'établissement de communication (IAM), la liaison automatique entre l'abonné appelant et une fonction de réseau appropriée a lieu grâce au système logique de service en vue de l'auto-identification et de l'authentification, les procédures pour l'auto-identification et l'authentification de l'abonné étant réalisées grâce à la coopération du système de réseau intelligent (INS) avec un système interactif de réponse vocale (IVR), l'abonné étant invité par le système de réseau intelligent (INS) à entrer manuellement son numéro d'appel (MSISDN) et un code personnel confidentiel (PIN),
le numéro d'appel (MSISDN) entré par l'abonné et le code confidentiel (PIN) sont transmis par le système de réseau intelligent (INS) au système interactif de réponse vocale (IVR) et ce dernier, après réception du numéro d'appel (MSISDN) entré et du code confidentiel (PIN), établit une liaison test avec le système de messagerie vocale (VMS), lequel vérifie la validité du numéro d'appel (MSISDN) à partir des données d'abonné mises en mémoire et authentifie ce numéro d'appel à l'aide du code confidentiel (PIN), et
le résultat de la procédure d'authentification est signalé par le système interactif de réponse vocale (IVR) au système de réseau intelligent (INS) et une fois que la procédure d'authentification a été conclue avec succès, le système de réseau intelligent (INS) lance les procédures nécessaires à l'utilisation de la fonction de réseau souhaitée par l'abonné appelant, et met automatiquement l'abonné en communication avec le service sélectionné.

2. Procédé selon la revendication 1, **caractérisé en ce que** le système logique de service est mis en oeuvre dans le système de réseau intelligent (INS) du réseau radiotéléphonique mobile.

3. Procédé selon la revendication 1 ou 2, **caractérisé en ce qu'**une transmission entre le terminal de l'abonné appelant et le système interactif de réponse vocale (IVR) a lieu par signalisation intrabande DTMF.

4. Procédé selon l'une des revendications 1 à 3, **caractérisé en ce qu'**un échec d'authentification d'abonné entraîne la coupure, au raccrochage du demandé, de la communication établie avec l'abonné appelant.

5. Procédé selon l'une des revendications 1 à 4, **caractérisé en ce que** la liaison entre le système interactif de réponse vocale (IVR) et le système de réseau intelligent (INS) se fait par signalisation ISUP.

6. Procédé selon l'une des revendications 1 à 5, **caractérisé en ce que** le système interactif de réponse vocale (IVR) est intégré, comme périphérie intelligente centralisée, au système de réseau intelligent (INS).

7. Procédé selon l'une des revendications 1 à 6, **caractérisé en ce qu'**au lieu d'un indicatif d'accès choisi, l'abonnement à des services de réseau intelligent peut se faire par l'abonné appelant.

8. Procédé selon l'une des revendications 1 à 7, **caractérisé en ce que** pour une activation du code confidentiel (PIN), on peut choisir le même indicatif d'accès au service que celui avec lequel les services liés à ce code confidentiel (PIN) sont atteints après une activation réussie.

9. Procédé selon l'une des revendications 1 à 8, **caractérisé en ce que** la procédure pour activer un code confidentiel (PIN) pour un indicatif d'accès au service défini est lancée lorsqu'un abonné compose cet indicatif et que pour la première fois, son numéro d'appel (MSISDN) n'est pas fourni par le protocole de signalisation.

10. Procédé selon l'une des revendications 1 à 9, **caractérisé en ce que** l'activation d'un code confidentiel (PIN) a lieu dans le système de messagerie vocale (VMS), l'abonné appelant étant relié pour la procédure d'activation au système interactif de réponse vocale (IVR).

11. Procédé selon l'une des revendications 1 à 10, **caractérisé en ce que** pour chaque indicatif d'accès au service pour lequel une activation séparée d'un code confidentiel (PIN) est nécessaire, le point de commutation de service (M-SSP) pose un numéro d'appel de service individuel (MSISDN_service) pour l'établissement de la liaison avec le système interactif de réponse vocale (IVR).

12. Procédé selon l'une des revendications 1 à 11, **caractérisé en ce qu'**après l'entrée du numéro d'appel (MSISDN) par l'abonné appelant, on reconnaît dans le système de messagerie vocale (VMS) si l'activation d'un code conf identiel (PIN) a déjà eu lieu pour la combinaison numéro d'appel d'abonné (MSISDN_abonné)/numéro d'appel de service (MSISDN_service).

13. Procédé selon l'une des revendications 1 à 12, **caractérisé en ce que** le code confidentiel (PIN) pour l'authentification d'un numéro d'appel (MSISDN) entré manuellement peut être identique ou différent du code confidentiel (PIN) pour l'accès à la boîte aux lettres personnelle de l'abonné.
